# EUROPÄISCHE PATENTSCHRIFT

(11) **EP 4 584 139 B1**
(45) Veröffentlichungstag und Bekanntmachung des Hinweises auf die Patenterteilung: **07.10.2026**
(21) Anmeldenummer: 23749076.8
(22) Anmeldetag: 31.07.2023
(51) Int. Cl.: B60T 8/92, B60T 13/66

(54) **VERFAHREN ZUM BETRIEB EINES BREMSSYSTEMS**
METHOD FOR OPERATING A BRAKE SYSTEM
PROCÉDÉ DE FONCTIONNEMENT D'UN SYSTÈME DE FREINAGE

(30) Priorität: 07.09.2022 DE 102022209274
(43) Veröffentlichungstag der Anmeldung: 16.07.2025
(73) Patentinhaber: Robert Bosch GmbH, 70442 Stuttgart (DE)
(72) Erfinder: LUTZ, Sabrina, 70736 Fellbach (DE); VOLLERT, Herbert, 71665 Vaihingen/Enz (DE); COLLINS, Reid, 74670 Forchtenberg (DE); KINDER, Ralf, 74360 Auenstein (DE)
(86) Internationale Anmeldenummer: PCT/EP2023/071171
(87) Internationale Veröffentlichungsnummer: WO 2024/052009

(56) Entgegenhaltungen:
- DE-A1- 102014 225 958
- DE-A1- 102017 000 472
- DE-A1- 102018 214 353

## Beschreibung

Die vorliegende Erfindung betrifft ein Verfahren zum Betrieb eines Bremssystems aus einer Fremdkraftbremse und einer Fahrdynamikregelung nach einer Detektion eines Unterschreitens eines Mindestfüllstands in einem Bremsflüssigkeitsreservoir des Bremssystems. Auch betrifft die Erfindung ein Bremssystem, mit welchem ein solches Verfahren durchführbar ist.

### Stand der Technik

Heutige Fremdkraftbremssysteme zeichnen sich dadurch aus, dass sie mechanisch und/oder hydraulisch an den Fahrer angekoppelt sind. Dies geschieht über ein Bremspedal, dass mit einer Eingangsstange verbunden ist. Über diese Eingangsstange wird im Vollsystem der Fahrerbremswunsch erfasst, und ein Pedalgefühl in Form eine Kraft-Weg-Kennlinie realisiert. Der Druckaufbau erfolgt dann über einen Kolben, der hydraulisch vom Fahrerfuß entkoppelt ist. In der Rückfallebene ist der Fahrerfuß dann mittels eines mit Muskelkraft betätigten Bremszylinders mit den Radbremszylindern gekoppelt, wodurch der Fahrer mittels Fuß einen Bremsdruck aufbringen kann. Dadurch bleibt das Fahrzeug im Fehlerfall weiterhin bremsbar.

Aus der DE 10 2018 214353 A1 ist ein der Erfindung nahe kommendes Verfahren zum Betrieb eines Bremssystems aus einer Fremdkraftbremse und einer Fahrdynamikregelung nach einer Detektion eines Unterschreitens eines Mindestfüllstands in einem Bremsflüssigkeitsreservoir des Bremssystems bereits bekannt. Das bekannte Verfahren unterscheidet sich von der Erfindung darin, dass nachdem ein Bremssignal detektiert worden ist, die folgenden Verfahrensschritte durchgeführt werden:
- Vorfahren eines Fremdkraftkolbens in eine vordere Stellung, bei der der benötigte Bremsdruck erzielt wird;
- Ermitteln eines Wegbetrags des Fremdkraftkolbens aus einer Grundstellung bis zu einer aktuellen Stellung;
- Halten des Bremsdrucks und weiteres Vorfahren des Fremdkraftkolbens um einen Korrekturwert, für den Fall, dass der Bremsdruck während des Haltens nachlässt,
- Zurückfahren des Fremdkraftkolbens um den ermittelten Wegbetrag, nach Beendigung des Bremsvorgangs und
- Degradieren des Bremssystems, falls ein Grenzwert für die vordere Stellung des Fremdkraftkolbens erreicht wird.

Weitere Verfahren zum Betrieb von Bremssystemen aus jeweils einer Fremdkraftbremse und jeweils einer Fahrdynamikregelung sind in der DE 10 2017 000472 A1 oder in der DE 10 2014 225958 A1 offenbart.

Die DE 10 2018 222 488 A1 offenbart schließlich eine elektrohydraulische Fremdkraft-Fahrzeugbremsanlage für ein autonom fahrendes Landfahrzeug. Ein solches elektrohydraulische Fremdkraft-Fahrzeugbremsanlage ist dabei mit zwei redundanten Fremdkraft-Bremsdruckerzeugern versehen, so dass bei Selbstfahrt und Ausfall eines Fremdkraft-Bremsdruckerzeugers der andere Fremdkraft-Bremsdruckerzeuger den Kraftfahrzeugwagen ohne Fahrereingriff bremsen kann.

Die der Erfindung zugrundeliegende Aufgabe liegt darin, ein Verfahren anzugeben, mit welchem das Bremssystem bei Detektion eines Unterschreitens eines Mindestfüllstands in einem Bremsflüssigkeitsreservoir, länger in einem sicheren Zustand gehalten werden kann und mit welchem dadurch die Sicherheit und Zuverlässigkeit der Bremsanlage verbessert wird.

Die Aufgabe wird gelöst durch ein Verfahren zum Betrieb eines Bremssystems mit den Merkmalen des Anspruchs 1. Bevorzugte Ausführungsformen sind den abhängigen Ansprüchen zu entnehmen.

### Offenbarung der Erfindung

Die Erfindung gibt ein Verfahren zum Betrieb eines Bremssystems aus einer Fremdkraftbremse und einer Fahrdynamikregelung an, nach einer Detektion eines Unterschreitens eines Mindestfüllstands in einem Bremsflüssigkeitsreservoir des Bremssystems. Nach einer Detektion des Unterschreitens des Mindestfüllstands wird davon ausgegangen, dass eine Leckage im Bremssystem vorliegt, über welche ein Teil der Bremsflüssigkeit bereits verloren wurde. Das Verfahren umfasst dabei die Schritte des Detektierens eines Bremssignals, des Vorfahren eines Fremdkraftkolbens in eine vordere Stellung, bei der der benötigte Bremsdruck erzielt wird und des Ermittelns des Wegbetrags des Fremdkraftkolbens aus der Grundstellung bis zu der aktuellen Stellung. Der Wegbetrag ist ein Wert für einen Vorschubweg des Fremdkraftkolbens, welcher beispielsweise in mm angegeben sein kann. Die Grundstellung ist dabei eine Stellung des Fremdkraftkolbens, bei welcher kein Bremsdruck generiert wird.

In einem weiteren Schritt wird der Bremsdruck gehalten und für den Fall, dass der Bremsdruck während des Haltens nachlässt, der Fremdkraftkolben um einen Korrekturweg weiter vor gefahren. Ein Absinken des Bremsdrucks kann dabei durch einen Verlust von Bremsflüssigkeit aufgrund der Leckage, auftreten. Um den Bremsdruck trotz der Leckage konstant halten zu können, wird entsprechend der Fremdkraftkolben in Richtung eines Auslasses des Fremdkraftzylinder verschoben, um den Verlust der Bremsflüssigkeit auszugleichen.

Nach Beendigung des Bremsvorgangs wird der Fremdkraftkolben um den ermittelten Wegbetrag zurück gefahren. Der Fremdkraftkolben wird somit um den gleichen Wegbetrag zurück gefahren, über welchen der Bremsdruck erstmalig erreicht wurde. Der Fremdkraftkolben wird somit nicht noch zusätzlich um den Korrekturweg zurück gefahren. Entsprechend erreicht der Kolben vor einer nächste Bremsung nicht die vorherige Grundstellung. Da bei dem Bremsvorgang Bremsflüssigkeit durch die Leckage verloren gegangen sein kann, wird somit vermieden, dass Luft in das Bremssystem eingebracht wird. Dadurch kann das Bremssystem länger in einem sicheren Zustand gehalten werden und muss dadurch nicht bereits beim Detektieren eines Unterschreiten des Mindestfüllstands degradiert werden.

Falls ein Grenzwert für die vordere Stellung des Fremdkraftkolbens erreicht wird, wird das Bremssystem degradiert. Der Grenzwert kann dabei fest vorgeben sein oder variabel angepasst werden. Unter einem Degradieren des Bremssystems wird verstanden, dass dieses in einer Notbetrieb übergeht, bei welchem die volle Funktionsfähigkeit nicht mehr zur Verfügung steht. Das Bremssystem wird dadurch, rechtzeitig vor einem Ausfall der Bremsleistung, in einem Degradierten Zustand weiterbetrieben, so dass weiterhin eine eingeschränkte Bremsung möglich ist. Dadurch kann trotz eines längeren Betriebs des Bremssystems sicher gestellt werden, dass dieses rechtzeitig in einen degradierten Modus betrieben wird. Die Sicherheit eines solchen Bremssystems ist somit weiterhin garantiert.

In einer bevorzugten Ausführung der Erfindung wird als Grenzwert eine vordere Endstellung des Fremdkraftkolbens gewählt, bei welcher kein weiterer Druckaufbau durch den Fremdkraftkolben möglich ist. Eine vordere Endstellung des Fremdkraftkolbens ist dabei die Position, bei welchem ein maximaler Verfahrweg des Fremdkraftkolbens erreicht ist. Dies kann beispielsweise eine Position sein, bei welchem der Fremdkraftkolben am Boden den Fremdkraftzylinders angekommen ist. In diesem Fall ist in dem Fremdkraftzylinder keine Bremsflüssigkeit vorhanden, mit welcher der Bremsdruck erhöht werden könnte. Durch Wählen dieses Grenzwerts kann das Bremssystem eine maximale Zeit in einem sicheren, nicht degradierten, Zustand gehalten werden, so dass die volle Bremsleistung zur Verfügung steht.

In einer weiteren bevorzugten Ausführung der Erfindung wird ein Degradieren des Bremssystems direkt mit Erreichen des Grenzwerts durchgeführt. Mit einem Erreichen des Grenzwerts ist gegebenenfalls kein zusätzlicher Bremsdruck erzeugbar. Um bei einem durch die Leckage sich verringernden Bremsdrucks das Fahrzeug weiterhin bremsen zu können, wird dieses sofort degradiert. Dadurch wird eine ausreichende Sicherheit zum Bremsen des Fahrzeugs bereitgestellt.

Vorzugsweise wird als Grenzwert für die vordere Stellung ein Weg vor Erreichen einer Endstellung gewählt, so dass nach Erreichen des Grenzwerts der Bremsvorgang unter Einbeziehung eines Korrekturwegs vor Erreichen der Endstellung beendet werden kann. Nach Erreichen des Grenzwerts ist somit für den aktuellen Bremsvorgang trotz eines Korrekturwegs ausreichend Bremsflüssigkeit im Fremdkraftzylinder, so dass der Bremsvorgang sicher beendet werden kann. Für den Korrekturweg wird vorteilhafterweise ein bestimmter Wert angenommen. Das Bremssystem muss somit nicht während des Bremsvorgangs degradiert werden. Da eine Degradierung während des Bremsvorgangs zu Bremskraftverlust führt, kann der aktuelle Bremsvorgang mit voller Bremskraft beendet werden. Die Sicherheit des Bremsvorgangs wird dadurch erhöht.

In einer vorteilhaften Weiterbildung wird für die Ermittlung eines Grenzwerts ein Korrekturweg aus vorangegangenen Bremsungen verwendet. Da der Korrekturweg von der Art und Größe der Leckage abhängt, kann ein fest angenommener Korrekturweg eventuell zu klein sein. Vor Erreichen des Grenzwertes werden jedoch normalerweise mehrere Bremszyklen vorgenommen. Anhand der während dieser Bremszyklen notwendigen Korrekturwege kann der Korrekturweg zur Ermittlung eines Grenzwerts besser abgeschätzt werden, so dass durch ein solches Verfahren das Bremssystem länger in einem sicheren Zustand gehalten werden kann.

Vorteilhafterweise wird ein Degradieren des Bremssystems nach abgeschlossenem Bremsvorgang durchgeführt. Eine Degradierung des Bremssystems muss somit nicht während der Bremsung durchgeführt werden. Die Sicherheit des Bremssystems wird dadurch erhöht.

Bei einer weiteren vorteilhaften Ausführung werden Kreistrennventile, zum Trennen der Bremskreise der Fahrdynamikregelung, in einem ungebremsten Zustand geschlossen. Durch die Kreistrennventile werden beide Bremskreise zueinander getrennt. Dadurch wird verhindert, dass zusätzlich zu dem Kreislauf, in dem die Leckage vorliegt, auch der andere Bremskreislauf leer läuft. Dadurch ist somit zumindest im degradierten Zustand ein Bremskreislauf vorhanden, mit welchem eine Bremskraft auf die Fahrzeugbremsen aufbringbar ist.

Gemäß einer zweckmäßigen Ausführung wird eine Warnung an einen Benutzer ausgegeben wird nach einer Detektion eines Unterschreitens eines Mindestfüllstands in einem Bremsflüssigkeitsreservoir des Bremssystems eine Warnung an einen Benutzer ausgegeben. Dem Fahrer wird somit frühzeitig, vor Degradierung des Bremssystems, mitgeteilt das ein Problem mit dem Bremssystem vorliegt, so dass dieser noch sicher zur nächsten Werkstatt fahren kann. Die Warnung wird dabei vorteilhafterweise optisch, akustisch und/oder haptisch ausgegeben.

Vorzugsweise wird nach einer Degradierung des Bremssystems der Bremsdruck über die Fahrdynamikregelung und/oder einen Hauptbremszylinder aufgebracht. Nach einer Degradierung wird somit kein Bremsdruck über den Fremdkraftzylinder aufgebracht. Es kann somit in einem Notbetrieb, trotz eines in einer vorderen Endstellung positionierten Fremdkraftkolbens, weiterhin Bremsdruck aufgebracht werden, so dass die Sicherheit des Bremssystems gewährleistet bleibt.

Vorteilhafterweise werden nach einer Degradierung des Bremssystems die Bremskreise über Kreistrennventile, zum Trennen der Bremskreise der Fahrdynamikregelung, getrennt. Mit einer Degradierung entfällt eine Druckerzeugung durch den Fremdkraftkolben, so dass die Kreistrennventile nicht geöffnet werden müssen. Dadurch wird der Effekt einer Leckage auf einen Bremskreis begrenzt, so dass im Notbetrieb eine Bremsung mit zumindest einem Bremskreis möglich ist. Die Ausfallsicherheit des Bremssystems wird dadurch erhöht.

Die der Erfindung zugrunde liegende Aufgabe wird zusätzlich gelöst durch ein Bremssystem mit einer Fremdkraftbremse und einer Fahrdynamikregelung und einem Steuergerät, welches eingerichtet ist bei Detektion eines Unterschreitens eines Mindestfüllstands in einem Bremsflüssigkeitsreservoir des Bremssystems, das Verfahren zum Betrieb eines Bremssystems auszuführen. Mit einem solchen Bremssystem werden die zu dem Verfahren genannten Vorteile erzielt. Ein solches Bremssystem kann somit länger in einem sicheren Zustand gehalten werden.

Ausführungsbeispiele der Erfindung sind in der Zeichnung dargestellt und in der nachfolgenden Beschreibung näher erläutert. Es zeigt:
- Figur 1: Ausführungsbeispiel eines Bremssystems zum Durchführen des Verfahrens, während einer Bremsung,
- Figur 2: Darstellung eines Verfahrens zum Betrieb des Bremssystems nach einem Ausführungsbeispiel der Erfindung, und
- Figur 3: Darstellung eines Weg-Zeit Diagramms des Fremdkraftkolbens in Verbindung mit dem Bremsdruck.

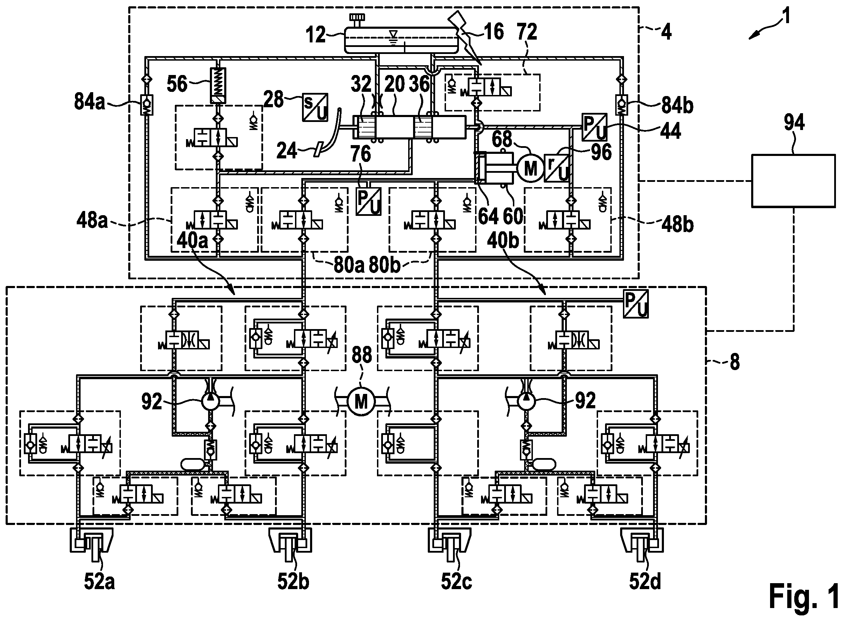

In Figur 1 ist ein Ausführungsbeispiel eines Bremssystems 1 zum Durchführen des Verfahrens gezeigt. Das Bremssystem 1 ist dabei während einer Bremsung dargestellt. Das Bremssystem 1 umfasst eine Fremdkraftbremse 4 und eine Fahrdynamikregelung 8. Die Fremdkraftbremse 4 umfasst ein Bremsflüssigkeitsreservoir 12, dessen Füllstand mit einem nicht gezeigten Füllstandssensor ermittelbar ist. In dem hier gezeigten Bremssystem 1 liegt das Signal 16 vor, dass sich der Füllstand unter einem Mindestfüllstand befindet.

Das Bremssystem 1 umfasst zusätzlich einen Hauptbremszylinder 20, welcher über ein Bremspedal 24 von einem Fahrer betätigbar ist und der mit Bremsflüssigkeit aus dem Bremsflüssigkeitsreservoir 12 versorgt wird. Der Weg des Bremspedals wird entsprechend über einen Wegsensor 28 gemessen. Der Hauptbremszylinder 20 weist einen ersten und einen zweiten Bremskolben 32, 36 auf, mit welchen jeweils ein getrennter Bremskreis 40a, 40b ansteuerbar ist. Der im Hauptbremszylinder 20 erzeugte Druck wird mittels eines Hauptbremszylinder-Drucksensor 44 gemessen.

Im Regelbetrieb des Bremssystems 1 sind die Hauptbremszylindertrennventile 48a, 48b geschlossen. Mit den Hauptbremszylindertrennventilen 48a, 48b kann der Hauptzylinder 20 mit der den Bremskreisen 40a, 40b der Fahrdynamikregelung 8 verbunden werden, um einen Bremsdruck auf Fahrzeugbremsen 52a, 52b, 52c, 52d des Bremssystems 1 aufzubringen. In dem hier gezeigten Fall wird mit dem Druck des Hauptbremszylinder 20 ein Bremsgefühlsimulator 56 betätigt, über welchen dem Fahrer ein Bremsgefühl generiert wird.

Die Fremdkraftbremse 4 umfasst zusätzlich eine Fremdkraftzylinder 60, in welchem ein Fremdkraftkolben 64 angeordnet ist, der über einen Motor 68 in axialer Richtung des Fremdkraftzylinders 60 verfahrbar ist, um einen Bremsdruck zu generieren. In der hier gezeigten Figur ist der Fremdkraftkolben 64 in einer vorderen Endstellung gezeigt. Der Fremdkraftzylinder 60 ist über ein Fremdkraftzylinderventil 72 mit dem Bremsflüssigkeitsreservoir 12 fluidisch verbunden. Der über den Fremdkraftkolben 64 erzeugte Bremsdruck wird über einen Bremsdrucksensor 76 gemessen. Der Fremdkraftzylinder 60 ist über zwei Kreistrennventilen 80a, 80b mit den beiden Bremskreisen 40a, 40b der Fahrdynamikregelung 8 verbunden.

Zum Versorgen der Bremskreise 40a, 40b der Fahrdynamikregelung 8 mit Bremsflüssigkeit sind diese Bremskreise 40a, 40b direkt über jeweils ein Rückschlagventil 84a, 84b mit dem Bremsflüssigkeitsreservoir 12 verbunden. Über dieses Rückschlagventil 84a, 84b kann die Fahrdynamikregelung 8 bei Bedarf die Bremsflüssigkeit aus dem Bremsflüssigkeitsreservoir 12 saugen. Zum Regeln der Fahrdynamik und zum Aufbringen und Ablassen eines Bremsdrucks an den Fahrzeugbremsen 52a, 52b, 52c, 52d weist die Fahrdynamikregelung 8 verschiedene Einlass und Auslassventile, sowie eine über einen Pumpenmotor 88 angetriebene Bremsflüssigkeitspumpe 92 auf.

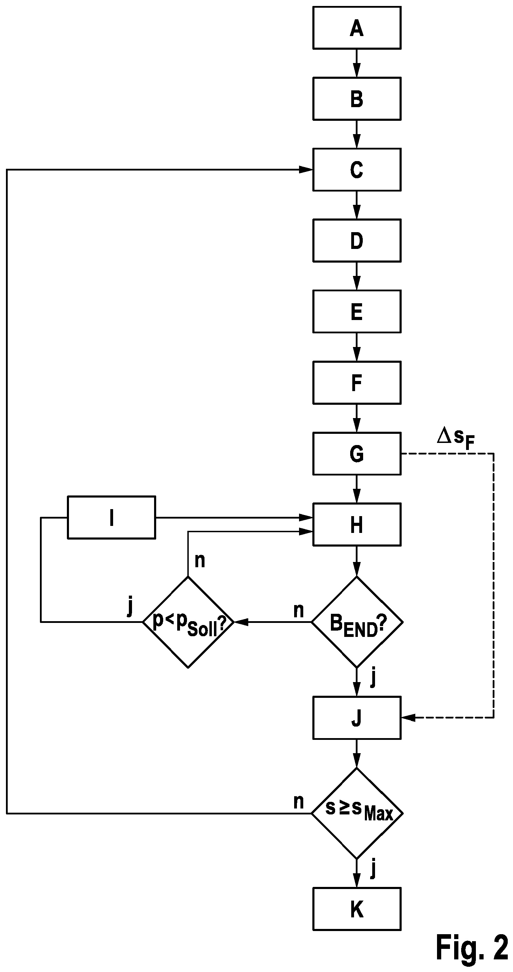

Zusätzlich weist das Bremssystem 1 ein Steuergerät 94 auf, welches mit der Fremdkraftbremse 4 und mit der Fahrdynamikregelung 8 signaltechnisch verbunden ist. Dieses Steuergerät 94 empfängt die Messwerte der Sensoren und steuert die Ventile der Fremdkraftbremse 4 und der Fahrdynamikregelung 8, sowie die Bewegung des Fremdkraftkolbens 64. Auf diesem Steuergerät 94 läuft dabei das erfindungsgemäße Verfahren nach Figur 2 ab.

Figur 2 zeigt eine Darstellung eines Verfahrens zum Betrieb des Bremssystems 1 nach einem Ausführungsbeispiel der Erfindung. In einem ersten Schritt A wird eine Unterschreitung des Mindestfüllstands in dem Bremsflüssigkeitsreservoir 12 detektiert. In einem anschließenden Schritt B wird eine Warnung an einen Fahrer ausgegeben. Die Warnung kann dabei in Form einer leuchtenden Warnlampe ausgebildet sein. Das Bremssystem 1 wird entsprechend in einem entsprechenden Leckage Modus betrieben. Da durch eine solche Leckage Bremsflüssigkeit verloren geht wird in eine nächsten Schritt, zum Trennen der Bremskreise 40a, 40b die Kreistrennventile 80a, 80b während des ungebremsten Zustands geschlossen. Dadurch wird vermieden, dass beide Bremskreise 40a, 40b über die Leckage leer laufen, so dass zumindest einer der Bremskreise 40a, 40b zum Bremsen des Fahrzeugs nutzbar bleibt.

In einem nächsten Schritt D wird detektiert, ob ein Bremssignal vorliegt. Bei Vorliegen eines Bremssignals wird in einem nächsten Schritt E die Kreistrennventile 80a, 80b wieder geöffnet. Dadurch wird gewährleistet, dass der über den Fremdkraftkolben 64 generierte Bremsdruck auf die Bremskreise 40a, 40b und damit auf die Fahrzeugbremsen 52a, 52b, 52c, 52d aufgebracht werden kann. Entsprechend wird in einem daran anschließenden Schritt F der Fremdkraftkolben 64 entsprechend dem Bremssignal in eine vordere Position vorgefahren, so dass ein benötigter Bremsdruck pₛₒₗₗ erzeugt wird.

Anschließend daran wird in Schritt G der Wegbetrag Δs_{F} des Fremdkraftkolbens 64 aus der Grundstellung zu der aktuellen Stellung ermittelt. Dies kann über einen am Motor 68 zum Antrieb des Fremdkraftkolbens 64 angebrachten Umdrehungssensor 96 ermittelt werden. Nach einem Erreichen des benötigten Bremsdrucks pₛₒₗₗ wird dieser in einem nächsten Schritt H gehalten. Falls der über den Hauptbremszylinder-Drucksensor 44 gemessene Bremsdruck p, aufgrund der Leckage, während des Haltens absinken sollte, wird der Fremdkraftkolben 64 weiter vor gefahren, bis der benötigte Bremsdruck pₛₒₗₗ wieder vorliegt. Dadurch ergibt sich ein Korrekturweg s_{K} des Fremdkraftkolbens 64.

Nach Beendigung des Bremsvorgangs B_{END} wird der Fremdkraftkolben 64, in Schritt J, um den in Schritt G ermittelten Wegbetrag Δs_{F} in eine Grundstellung, bei welcher kein Bremsdruck p vorliegt, zurückgefahren. Die neue Grundstellung kann dabei aufgrund des Korrekturwegs s_{K} weiter vorne liegen. Abschließend wird geprüft, ob für die vordere Stellung des Fremdkraftkolbens 64 ein Grenzwert s_{Max} erreicht wurde, so dass keine weitere Bremsung durchgeführt werden kann. Falls dies nicht der Fall ist, kann das Verfahren weiterhin ausgeführt werden. Es wird dabei erneut mit Schritt C begonnen, bei welchem zuerst die Kreistrennventile 80a, 80b geschlossen werden.

Das Verfahren kann dabei so oft durchgeführt werden, bis die Überprüfung ergibt, dass ein Grenzwert s_{Max} für die vordere Stellung des Fremdkraftkolbens 64 erreicht wurde. In diesem Fall wird das Bremssystem 1 degradiert, so dass der Bremsdruck p über die Fahrdynamikregelung 8 und/oder den Hauptbremszylinder 20 aufgebracht wird.

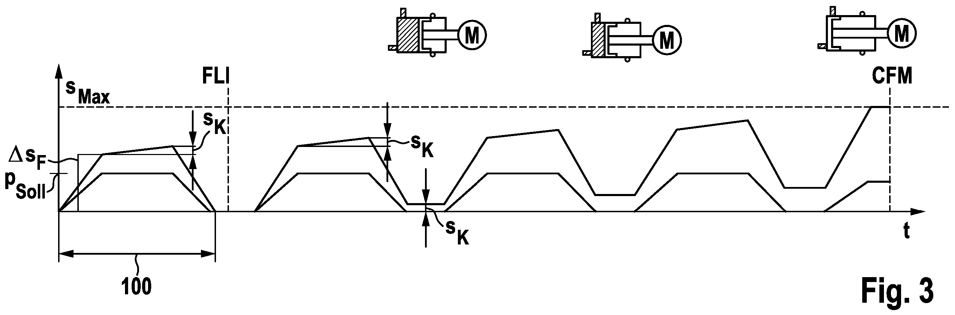

In Figur 3 ist eine Darstellung eines Weg-Zeit Diagramms s/t des Fremdkraftkolbens 64 in Verbindung mit dem Bremsdruck p/t gezeigt. In diesem Diagramm werden mehrere Bremszyklen 100 gezeigt. Die obere Kurve zeigt dabei den Weg s des Fremdkraftkolbens 64, während die untere Kurve den Bremsdruck p zeigt. Es ist dabei zu erkennen, dass bei einem Vorfahren des Fremdkraftkolbens 64 der Bremsdruck p ansteigt, bis der benötigte Bremsdruck pₛₒₗₗ erzielt wird. Obwohl der Bremsdruck pₛₒₗₗ konstant bleibt, ändert sich der Weg s des Fremdkraftkolbens 64 weiterhin. Dies kommt daher, dass der Fremdkraftkolben 64 durch eine Leckage den Druckverlust durch ein weiteres Vorfahren ausgleicht. Ohne eine Leckage, würde sich der Weg des Fremdkraftkolbens bei Erreichen des benötigten Bremsdrucks pₛₒₗₗ nicht ändern.

Aufgrund der Leckage kommt es zu einem Verlust an Bremsflüssigkeit. Entsprechend wird nach Unterschreiten eines Mindestfüllstands in dem Bremsflüssigkeitsreservoir 12 an Punkt FLI eine Warnung ausgegeben und der Leckage Modus aktiviert. Entsprechend wird bei folgenden Bremszyklen 100 nach Beendigung des Bremsvorgangs der Fremdkraftkolben 64 lediglich um den Wegbetrag Δs_{F} zurückgefahren, welcher zum erstmaligen Erreichen des benötigten Bremsdrucks pₛₒₗₗ notwendig war. Entsprechend wird der zum Halten des Bremsdrucks pₛₒₗₗ notwendige Korrekturweg s_{K} nicht zurückgefahren. Um diesen Korrekturweg s_{K} ist demnach die neue Grundstellung nach vorne verschoben.

In dem Leckage Modus können dabei so viele Bremszyklen durchgeführt werden, bis der Fremdkraftkolben 64 den Grenzwert s_{Max} für die vordere Stellung erreicht hat. Diese kann, wie in Figur 3 gezeigt ist, bei der vorderen Endstellung liegen. Ab dem Zeitpunkt CFM, bei welchem der Grenzwert s_{Max} erreicht wurde, wird das Bremssystem lediglich in einem degradierten Modus weiterbetrieben.

## Patentansprüche

1. Verfahren zum Betrieb eines Bremssystems (1) aus einer Fremdkraftbremse (4) und einer Fahrdynamikregelung (8) nach einer Detektion eines Unterschreitens eines Mindestfüllstands in einem Bremsflüssigkeitsreservoir (12) des Bremssystems (1), umfassend die Schritte:
- Detektieren (D) eines Bremssignals,
- Vorfahren (F) eines Fremdkraftkolbens (64) in eine vordere Stellung, bei der der benötigte Bremsdruck (pₛₒₗₗ) erzielt wird,
- Ermitteln (G) des Wegbetrags (Δs_{F}) des Fremdkraftkolbens (64) aus der Grundstellung bis zu der aktuellen Stellung,
- Halten (H) des Bremsdrucks (p) und weiteres vorfahren (I) des Fremdkraftkolbens (64) um einen Korrekturweg (s_{K}), für den Fall, dass der Bremsdruck (p) während des Haltens (H) nachlässt,
- Zurückfahren (J) des Fremdkraftkolbens (64) um den ermittelten Wegbetrag (Δs_{F}), nach Beendigung des Bremsvorgangs, und
- Degradieren(K) des Bremssystems (1), falls ein Grenzwert (s_{Max}) für die vordere Stellung des Fremdkraftkolbens (64) erreicht wird.

2. Verfahren nach Anspruch 1, **dadurch gekennzeichnet, dass** als Grenzwert (s_{Max}) eine vordere Endstellung des Fremdkraftkolbens (64) gewählt wird, bei welcher kein weiterer Druckaufbau (p) durch den Fremdkraftkolben (64) möglich ist.

3. Verfahren nach Anspruch 2, **dadurch gekennzeichnet, dass** ein Degradieren (K) des Bremssystems (1) direkt mit Erreichen des Grenzwerts (s_{Max}) durchgeführt wird.

4. Verfahren nach Anspruch 1, **dadurch gekennzeichnet, dass** als Grenzwert (s_{Max}) für die vordere Stellung ein Weg (s) vor Erreichen einer Endstellung gewählt wird, so dass nach Erreichen des Grenzwerts (s_{Max}) der Bremsvorgang unter Einbeziehung eines Korrekturwegs (s_{Max}) vor Erreichen der Endstellung beendet werden kann.

5. Verfahren nach Anspruch 4, **dadurch gekennzeichnet, dass** für die Ermittlung eines Grenzwerts (s_{Max}) ein Korrekturweg (s_{K}) aus vorangegangenen Bremsungen verwendet wird.

6. Verfahren nach Anspruch 4 oder 5, **dadurch gekennzeichnet, dass** ein Degradieren (K) des Bremssystems (1) nach abgeschlossenem Bremsvorgang durchgeführt wird.

7. Verfahren nach einem der vorherigen Ansprüche, **dadurch gekennzeichnet, dass** Kreistrennventile (80a, 80b), zum Trennen der Bremskreise (40a, 40b) der Fahrdynamikregelung (8), in einem ungebremsten Zustand geschlossen (C) werden.

8. Verfahren nach einem der vorherigen Ansprüche, **dadurch gekennzeichnet, dass** nach einer Detektion eines Unterschreitens eines Mindestfüllstands in einem Bremsflüssigkeitsreservoir (12) des Bremssystems (1) eine Warnung (B) an einen Benutzer ausgegeben wird.

9. Verfahren nach Anspruch 8, **dadurch gekennzeichnet, dass** die Warnung optisch, akustisch und/oder haptisch ausgegeben wird.

10. Verfahren nach einem der vorherigen Ansprüche, **dadurch gekennzeichnet, dass** nach einer Degradierung (K) des Bremssystems der Bremsdruck (p) über die Fahrdynamikregelung (8) und/oder einen Hauptbremszylinder (20) aufgebracht wird.

11. Verfahren nach einem der vorherigen Ansprüche, **dadurch gekennzeichnet, dass** nach einer Degradierung (K) des Bremssystems (1) die Bremskreise (40a, 40b) über Kreistrennventile (80a, 80b), zum Trennen der Bremskreise (40a, 40b) der Fahrdynamikregelung (8), getrennt werden.

12. Bremssystem (1) mit einer Fremdkraftbremse (4) und einer Fahrdynamikregelung (8) und einem Steuergerät (94), welches eingerichtet ist bei Detektion eines Unterschreitens eines Mindestfüllstands in einem Bremsflüssigkeitsreservoir des Bremssystems, das Verfahren nach einem der vorherigen Ansprüche auszuführen.

## Claims

1. Method for operating a brake system (1), comprising a power brake (4) and a vehicle dynamics control system (8), after detection that the fill level in a brake fluid reservoir (12) of the brake system (1) has fallen below a minimum fill level, comprising the steps of:
- detecting (D) a brake signal,
- advancing (F) a power piston (64) to a forward position in which the required brake pressure (p_{target}) is obtained,
- determining (G) the amount of travel (Δs_{F}) of the power piston (64) from the basic position to the current position,
- maintaining (H) the brake pressure (p) and further advancing (I) the power piston (64) by a correction distance (s_{K}) in the event that the brake pressure (p) decreases during the maintaining operation (H),
- retracting (J) the power piston (64) by the determined amount of travel (Δs_{F}) after the braking operation has ended, and
- degrading (K) the brake system (1) if a limit value (sₘₐₓ) for the forward position of the power piston (64) is reached.

2. Method according to Claim 1, **characterized in that** the limit value (sₘₐₓ) selected is a forward end position of the power piston (64) in which no further build-up of pressure (p) by the power piston (64) is possible.

3. Method according to Claim 2, **characterized in that** degrading (K) of the brake system (1) is carried out immediately when the limit value (sₘₐₓ) is reached.

4. Method according to Claim 1, **characterized in that** the limit value (sₘₐₓ) selected for the forward position is a distance (s) before an end position is reached, such that, after the limit value (sₘₐₓ) is reached, the braking operation including a correction distance (sₘₐₓ) can be ended before the end position is reached.

5. Method according to Claim 4, **characterized in that** a correction distance (s_{K}) from previous braking operations is used for determining a limit value (sₘₐₓ).

6. Method according to Claim 4 or 5, **characterized in that** degrading (K) of the brake system (1) is carried out after the braking operation is completed.

7. Method according to any one of the preceding claims, **characterized in that** circuit isolation valves (80a, 80b) for isolating the brake circuits (40a, 40b) of the vehicle dynamics control system (8) are closed (C) in an unbraked state.

8. Method according to any one of the preceding claims, **characterized in that**, after detection that the fill level in a brake fluid reservoir (12) of the brake system (1) has fallen below a minimum fill level, a warning (B) is issued to a user.

9. Method according to Claim 8, **characterized in that** the warning is issued visually, acoustically and/or haptically.

10. Method according to any one of the preceding claims, **characterized in that**, after degrading (K) of the brake system, the brake pressure (p) is applied via the vehicle dynamics control system (8) and/or a master brake cylinder (20).

11. Method according to any one of the preceding claims, **characterized in that**, after degrading (K) of the brake system (1), the brake circuits (40a, 40b) are isolated via circuit isolation valves (80a, 80b) for isolating the brake circuits (40a, 40b) of the vehicle dynamics control system (8).

12. Brake system (1) with a power brake (4) and a vehicle dynamics control system (8) and a control unit (94), which is configured to carry out the method according to any one of the preceding claims after detection that the fill level in a brake fluid reservoir of the brake system has fallen below a minimum fill level.

## Revendications

1. Procédé de fonctionnement d'un système de freinage (1) constitué par un frein à force extérieure (4) et une régulation de la dynamique de conduite (8) après la détection d'un passage sous un état de remplissage minimal d'un réservoir à liquide de frein (12) du système de freinage (1), comprenant les étapes :
- détection (D) d'un signal de freinage,
- avancement (F) d'un piston à force extérieure (64) dans une position avant dans laquelle la pression de freinage nécessaire (pₛₒₗₗ) est atteinte,
- détermination (G) de la contribution de trajet (Δs_{F}) du piston à force extérieure (64) à partir de la position de base jusqu'à la position actuelle,
- maintien (H) de la pression de freinage (p) et avancement (I) supplémentaire du piston à force extérieure (64) d'un trajet de correction (s_{K}) pour le cas où la pression de freinage (p) baisse pendant le maintien (H),
- retour (J) du piston à force extérieure (64) de la contribution de trajet (Δs_{F}) déterminée après la fin du processus de freinage et
- dégradation (K) du système de freinage (1) dans le cas où une valeur limite (s_{Max}) pour la position avant du piston à force extérieure (64) est atteinte.

2. Procédé selon la revendication 1, **caractérisé en ce qu'**on choisit, comme valeur limite (s_{Max}), une position finale avant du piston à force extérieure (64) dans laquelle aucune autre élévation de pression (p) par le piston à force extérieure (64) n'est possible.

3. Procédé selon la revendication 2, **caractérisé en ce qu'**une dégradation (K) du système de freinage (1) est réalisée directement lorsque la valeur limite (s_{Max}) est atteinte.

4. Procédé selon la revendication 1, **caractérisé en ce qu'**on choisit, comme valeur limite (s_{Max}) pour la position avant un trajet (s) avant que la position finale ne soit atteinte de telle sorte qu'après avoir atteint la valeur limite (s_{Max}), le processus de freinage peut être terminé compte tenu d'un trajet de correction (s_{Max}) avant que la position finale ne soit atteinte.

5. Procédé selon la revendication 4, **caractérisé en ce que** pour la détermination d'une valeur limite (s_{Max}), un trajet de correction (s_{K}) provenant de freinages antérieurs est utilisé.

6. Procédé selon la revendication 4 ou 5, **caractérisé en ce qu'**une dégradation (K) du système de freinage (1) est réalisée lorsque le processus de freinage est terminé.

7. Procédé selon l'une des revendications précédentes, **caractérisé en ce que** des soupapes de séparation de circuit (80, 80b), destinées à séparer les circuits de freinage (40a, 40b) de la régulation de la dynamique de conduite (8), sont fermées (C) dans un état non freiné.

8. Procédé selon l'une des revendications précédentes, **caractérisé en ce qu'**un avertissement (B) est émis à un utilisateur après la détection d'un passage sous un état de remplissage minimal dans un réservoir à liquide de frein (12) du système de freinage (1).

9. Procédé selon la revendication 8, **caractérisé en ce que** l'avertissement est émis de manière optique, acoustique et/ou haptique.

10. Procédé selon l'une des revendications précédentes, **caractérisé en ce qu'**après une dégradation (K) du système de freinage, la pression de freinage (p) est appliquée par l'intermédiaire de la régulation de la dynamique de conduite (8) et/ou d'un vérin de freinage principal (20).

11. Procédé selon l'une des revendications précédentes, **caractérisé en ce qu'**après une dégradation (K) du système de freinage (1), les circuits de freinage (40a, 40b) sont séparés par l'intermédiaire de soupapes de séparation de circuit (80a, 80b), destinées à séparer les circuits de freinage (40a, 40b) de la régulation de la dynamique de conduite (8).

12. Système de freinage (1) présentant un frein à force extérieure (4) et une régulation de la dynamique de conduite (8) et un appareil de commande (94) qui est conçu pour exécuter le procédé selon l'une des revendications précédentes lors de la détection d'un passage sous un état de remplissage minimal dans un réservoir à liquide de frein du système de freinage.
